# EUROPEAN PATENT APPLICATION

(11) **EP 2 271 119 A2**
(43) Date of publication of application: **05.01.2011**
(21) Application number: 10154612.5
(22) Date of filing: 25.02.2010
(51) Int. Cl.: H04N 9/31, G02B 27/09

(54) **Illumination optical unit and display apparatus having the same**

(30) Priority: 01.07.2009 KR 20090059816
(71) Applicant: SAMSUNG ELECTRONICS CO., LTD., Suwon-si Gyeonggi-do 442-742 (KR)
(72) Inventor: Hong, Seok-chan, Yongin-si (KR); Moon, Joon-seok, Yongin-si (KR); Lee, Won-yong, Suwon-si (KR)
(74) Representative: Waddington, Richard

(57) **Abstract**

An illumination optical unit and a display apparatus having the same are provided. The display apparatus includes an illumination optical unit which generates and illuminates light; a display element which forms an image by the light illuminated from the illumination optical unit; and a projection optical unit which projects the image formed in the display element on a screen. The illumination optical unit includes a light source which includes a light emitting area, and a polarization converting unit which includes a plurality of polarization prisms which polarize and convert an entering light from the light source. The light source is disposed so that a long width of the light emitting area corresponds to a long width of the polarization prisms.

## Description

### BACKGROUND OF THE INVENTION

### 1. Field of the Invention

Apparatuses consistent with the present invention relate to an illumination optical unit of a projection type and a display apparatus having the same, and more particularly, to an illumination optical unit of an optical disposing configuration for increasing the amount of light entering a display element and a display apparatus having the same.

### 2. Description of the Related Art

A display apparatus includes a display panel embodied by a liquid crystal panel or a plasma panel, and processes an image to display in the panel. Also, a display apparatus of a projection type embodying a high quality image of a large screen by projecting an image formed to the display panel to the large screen by various lens configurations has been proposed.

The display apparatus of the projection type illuminates a light generated from a light source embodied by a lamp, etc. to the display panel to form an image in the panel. However, since the lamp has a short durability and a serious heat problem, recently, a light emitting diode (LED) element has been increasingly employed as a light source instead of the lamp. In comparison to the lamp, the light emitting diode element has the strong points that durability is long, heat generated is slight, a color reproduction is superior, and a clearer image can be displayed.

However, since a light output power of the light emitting diode element is lower than that of the lamp, the amount of light entering the display panel becomes sharply decreased in comparison to the amount of light initially generated from a light source. Accordingly, in employing the light emitting diode element as a light source, it is important to minimize a light loss caused until a light enters the display panel after the light is emitted from the light source to improve a light efficiency.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

According to an aspect of the present invention, there is provided a display apparatus, including: an illumination optical unit which generates and illuminates a light; a display element which forms an image by a light illuminated from the illumination optical unit; and a projection optical unit which projects an image formed in the display element on a screen, the illumination optical unit including: a light source which includes a light emitting area, and a polarization converting unit which includes a plurality of polarization prisms polarizing and converting an entering light from the light source, the light source being disposed so that a long width of the light emitting area corresponds to a long width of the polarization prisms.

The direction of the long width of the polarization prisms may cross at right angles with an entering direction of the entering light, and the long width of the light emitting area may be in parallel with the long width of the polarization prisms.

The illumination optical unit may include an equalizing unit which is disposed on a light path between the light source and the polarization converting unit, and includes a plurality of cell lenses uniformly adjusting a light amount distribution of a light emitted from the light source, a ratio of the long width and the short width of the light emitting area may be designated so that a ratio by which light images respectively formed by the plurality of cell lenses are overlapped can be less than or equal to a predetermined value.

A ratio of a long width and a short width of one cell lens may be the substantially same as a ratio of a long width and a short width of the display element.

The plurality of polarization prisms may be arrayed to correspond to a display area of the display element.

The polarization prisms may include: a polarization beam splitter which transmits a light of a first polarization and reflects a light of a second polarization among the entering light, a phase delaying filter which converts a light of the first polarization transmitting the polarization beam splitter into a light of the second polarization to emit in a predetermined direction, and a mirror which reflects a light of the second polarization reflected from the polarization beam splitter to emit in the predetermined direction.

The polarization beam splitter may extend to cross at right angles with the predetermined direction, and the long width of the light emitting area may be in parallel with a long width of the polarization beam splitter.

The light source may include a light emitting diode element.

The display element may include a liquid crystal display panel.

According to another aspect of the present invention, there is provided an illumination optical unit of a display apparatus, including: a light source which includes a light emitting area; and a polarization converting unit which includes a plurality of polarization prisms polarizing and converting an entering light from the light source, and emits the polarized and converted light to a display element forming an image, the light source being disposed so that a long width of the light emitting area corresponds to a long width of the polarization prisms.

The direction of the long width of the polarization prisms may cross at right angles with an entering direction of the entering light, and the long width of the light emitting area may be in parallel with the long width of the polarization prisms.

The illumination optical unit may include an equalizing unit which is disposed on a light path between the light source and the polarization converting unit, and includes a plurality of cell lenses uniformly adjusting a light amount distribution of a light emitted from the light source, a ratio of the long width and the short width of the light emitting area may be designated so that a ratio by which light images respectively formed by the plurality of cell lenses are overlapped can be less than or equal to a predetermined value.

A ratio of a long width and a short width of one cell lens may be the substantially same as a ratio of a long width and a short width of the display element.

The plurality of polarization prisms may be arrayed to correspond to a display area of the display element.

The polarization prisms may include: a polarization beam splitter which transmits a light of a first polarization and reflects a light of a second polarization among the entering light, a phase delaying filter which converts a light of the first polarization transmitting the polarization beam splitter into a light of the second polarization to emit in a predetermined direction, and a mirror which reflects a light of the second polarization reflected from the polarization beam splitter to emit in the predetermined direction.

The polarization beam splitter may extend to cross at right angles with the predetermined direction, and the long width of the light emitting area may be in parallel with a long width of the polarization beam splitter.

The light source may include a light emitting diode element.

### BRIEF DESCRIPTION OF THE DRAWINGS

The present invention will become apparent and more readily appreciated from the following description of the exemplary embodiments, taken in conjunction with the accompanying drawings, in which:
FIG. 1 is a plan view illustrating an optical disposition of a display apparatus according to an exemplary embodiment of the present invention;
FIG. 2 is a main portion perspective view illustrating a partial configuration of a display element and an illumination optical unit of the display apparatus in FIG. 1;
FIG. 3 exemplarily illustrates a method with which a polarization converting unit of the illumination optical unit in FIG. 2 converts a polarization property of a light;
FIG. 4 is a graph illustrating a relation between the ratio of a lengthwise width to a widthwise width of a light emitting element in the illumination optical unit in FIG. 2, and a light transmission efficiency;
FIG. 5 is a graph illustrating an entering light efficiency change of the display element in case of additionally considering a configuration related to an equalizing unit in FIG. 4; and
FIGS. 6A-6C exemplarily illustrate light images of a cell lens entering the polarization converting unit depending on the ratio of the lengthwise width to the widthwise width of the light emitting element in FIG. 4.

### DETAILED DESCRIPTION OF EXEMPLARY EMBODIMENTS

Reference will now be made in detail to the embodiments of the present invention, examples of which are illustrated in the accompanying drawings, wherein like reference numerals refer to like elements throughout. The exemplary embodiments are described below so as to explain the present invention by referring to the figures. Repetitive description with respect to like elements of different embodiments may be omitted for the convenience of clarity.

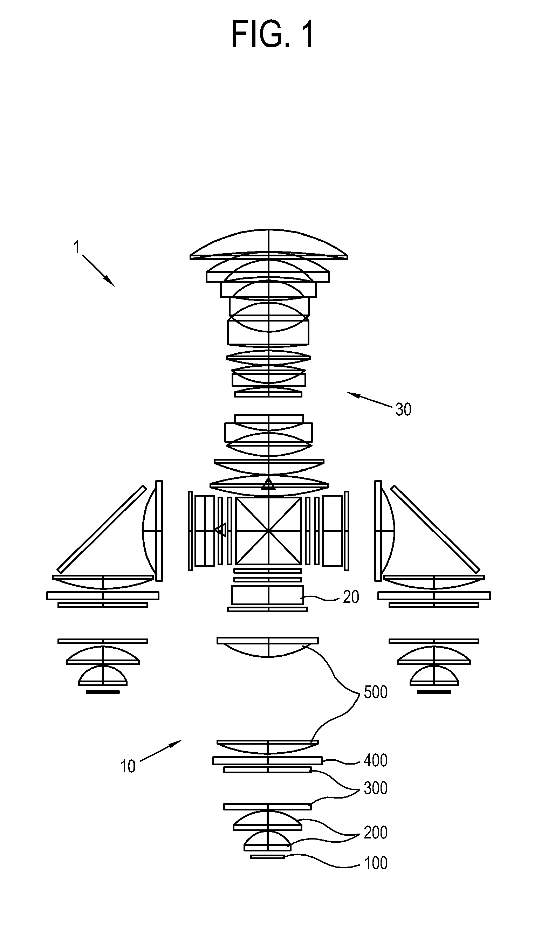

FIG. 1 is a plan view illustrating an optical disposition of a display apparatus 1 according to an exemplary embodiment of the present invention.

As shown in FIG. 1, the display apparatus 1 according to the present exemplary embodiment is embodied as a projection type, and includes a an illumination optical unit 10 illuminating a light having a predetermined color, a display element 20 forming an image based on a light illuminated from the illumination optical unit 10, and a projection optical unit 30 projecting the image formed in the display element 20 to be enlarged.

The illumination optical unit 10 and the display element 20 are disposed to the display apparatus 1 to correspond to each color, for example, RGB colors, and images formed by each color are overlapped to be projected by the projection optical unit 30. In the present exemplary embodiment, the illumination optical unit 10 and the display element 20 corresponding to one color will be described, and description about the other colors will be omitted because the present exemplary embodiment may be applied thereto. Also, a light path in the illumination optical unit 10 may be straight or may be changed by a reflecting mirror depending on an actual embodying type of the display apparatus 1, and these configurations do not define the present invention.

The illumination optical unit 10 includes a light source 100 generating a light, and a polarization converting unit 400 converting an entering light from the light source 100 into light with a predetermined polarization property to emit to the display element 20.

Also, the illumination optical unit 10 may further include a light paralleling unit 200 adjusting a light emitted from the light source 100 to be a parallel light, an equalizing unit 300 equalizing a light emitted from the light paralleling unit 200 to emit to the polarization converting unit 400, and a condensing unit 500 collecting a light emitted from the polarization converting unit 400 to emit to the display element 20.

Each configuration of the illumination optical unit 10 converting a property of an entering light to emit as described above may be embodied by a configuration such as a lens, and a plurality of lenses may be disposed along a light path to correct aberration.

The display element 20 selectively transmits or reflects a light illuminated from the illumination optical unit 10 to form an image. The display element 20 may be embodied by a reflecting type display element such as a digital micro mirror device (DMD), a reflecting type liquid crystal on silicon (LCOS), etc. forming an image by selectively reflecting an entering light by each pixel unit, and a transmitting type liquid crystal display element forming an image by selectively transmitting an entering light by each pixel unit.

The display element 20 according to the present exemplary embodiment is embodied by a liquid crystal display panel such as the LCOS element or the transmitting type liquid crystal display element, and in this case, a light entering the display element 20 should be adjusted to have a predetermined polarization property. Accordingly, the illumination optical unit 10 applies the polarization converting unit 400 to adjust a polarization property of a light entering the display element 20.

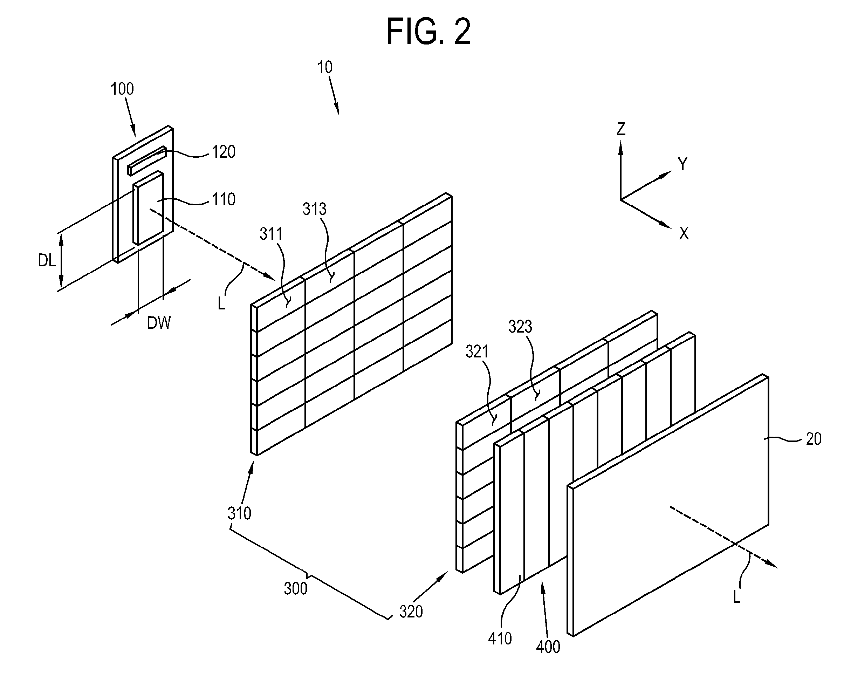

Hereinafter, a configuration of the illumination optical unit 10 according to the present exemplary embodiment will be described by referring to FIG. 2. FIG. 2 is a perspective view illustrating configurations of the light source 100, the equalizing unit 300 and the polarization converting unit 400 of the illumination optical unit 10, and the display element 20 illustrated in FIG. 1. FIG. 2 illustrates only configurations directly related to the present exemplary embodiment, and other configurations may be omitted.

Each direction illustrated in FIG. 2 is described. Directions X, Y and Z are directions crossing at right angles with respect to each other. A light path L from the light source 100 is formed along the direction X, and the display element 20 is disposed within the plane Y-Z. The equalizing unit 300 and the polarization converting unit 400 are disposed between the light source 100 and the display element 20 along the light path L. Hereinafter, each figure including FIG. 2 and exemplary embodiments will be described based on these direction definitions. Here, the opposite directions to the directions X, Y and Z refer to directions -X, -Y and -Z, and the plane Y-Z refers to a plane formed to the axis of the direction Y and the axis of the direction Z.

As shown in FIG. 2, the light source 100 includes a light emitting element 110 generating a light, and a light source substrate 120 mounted with the light emitting element 110 to control lighting of the light emitting element 110. Also, the polarization converting unit 400 includes a plurality of polarization prisms 410 arrayed to correspond to a display area of the display element 20 to polarize an entering light from the light source 100.

According to the present exemplary embodiment, by disposing a light emitting area of the light source 100, that is, a long width of the light emitting element 110, to correspond to a long width of the polarization prism 410, such as by disposing the long width of the light emitting element 110 to be in parallel with the long width of the polarization prism 410, the amount of light lost while light emitted from the light source 100 enters the display element 20 can be reduced. Accordingly, an entering light efficiency of the display element 20 can be improved.

Hereinafter, the configuration of the present exemplary embodiment will be described more in detail.

The light source 100 may employ various exemplary embodiments of the light emitting element 110 forming a light emitting area. For example, a light emitting diode (LED) element may be employed as the light emitting element 110 to generate a light. The light emitting element 110 embodied by the LED does not define the shape thereof, but may have a rectangular shape having a widthwise width DW and a lengthwise width DL. The widthwise width DW and the lengthwise width DL are formed to be asymmetric to each other. That is, the widthwise width DW and the lengthwise width DL of the light source 100 have different lengths, and respectively form a long width and a short width.

A light emitted from the light emitting element 110 in the direction X has a property of a diffusing light. The diffusing light is adjusted into a parallel light by the light paralleling unit (referring to 200 in FIG. 1). The light paralleling unit 200 in FIG. 2 does not define the embodying configuration thereof, but may be embodied as a collimating lens.

If a diffused light generated from the light source 100 is adjusted into a paralleling light, the equalizing unit 300 adjusts distribution of the light amount of the parallel light to be uniform. The equalizing unit 300 does not define the embodying configuration thereof, but may be embodied as a fly-eye lens. The equalizing unit 300 embodied as the fly-eye lens includes a plurality of cell lenses 311 and 321 arrayed two-dimensionally within the plane Y-Z.

The equalizing unit 300 according to the present exemplary embodiment includes a first equalizing lens 310 and a second equalizing lens 320 disposed along the light path L, and the first equalizing lens 310 and the second equalizing lens 320 are respectively arrayed with cell lenses 311 and 321 having the same standards. Here, the ratio of a long width and a short width of one cell lens 311 and 321 is the substantially same as the ratio of the long width and the short width of the display element 20, and the long width of the cell lens 311 and 321 and the long width of the display element 20 are in parallel with each other.

That is, the ratio of the widthwise width and the lengthwise width of the cell lens 311 and 321, and the ratio of the widthwise width and the lengthwise width of the display element 20 are provided to be the substantially same as each other so that a light equalized by the equalizing unit 300 can enter to correspond to the display area of the display element 20.

The polarization converting unit 400 converts a polarization property of a light emitted from the equalizing unit 300 to enter the display element 20. The polarization converting unit 400 includes the plurality of polarization prisms 410 arrayed to correspond to the display area of the display element 20. One polarization prism 410 extends in the directions Z or -Z, and the plurality of polarization prisms 410 are disposed in a row along the directions Y or -Y to form the polarization converting unit 400.

A long width of the polarization prism 410 is in parallel with respect to the light path L in a transverse direction, and more in detail, crosses at right angles with respect to an entering direction of an entering light.

In the present exemplary embodiment, the long width of the polarization prism 410 is described to be parallel with the direction Z, and the short width of the polarization prism 410 is described to be parallel with the direction Y, but the present invention is not defined thereto. Alternatively, the long width of the polarization prism 410 may be parallel with the direction Y, and a plurality of polarization prisms 410 may be disposed in a row in direction Z. In this case, with a consideration of the ratio of the widthwise width and the lengthwise width of the display element 20, it is necessary that the short width of one polarization prism 410 is configured to be relatively small. Accordingly, it is preferable to embody the polarization converting unit 400 according to the present exemplary embodiment in point of a manufacturing efficiency.

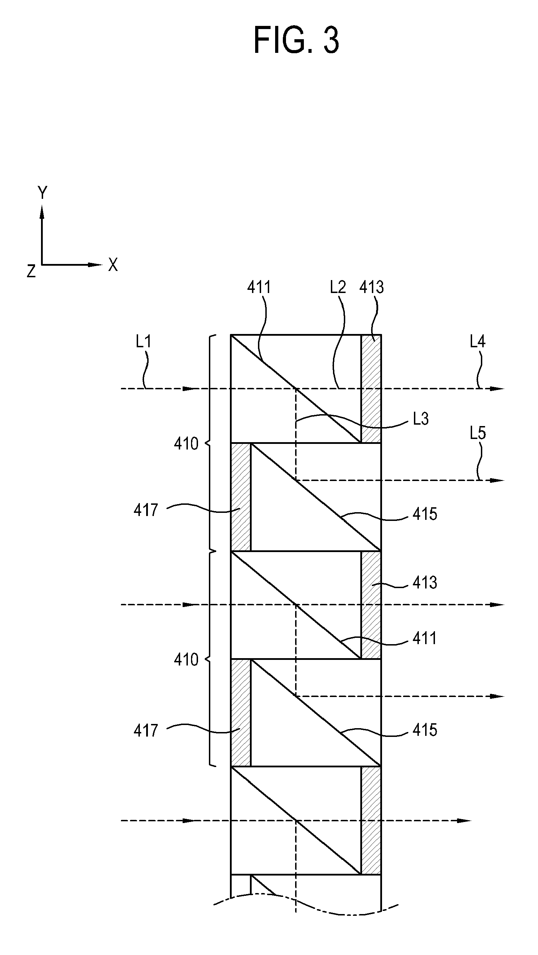

Hereinafter, the configuration of the polarization prism 410 will be described by referring to FIG. 3. FIG. 3 exemplarily illustrates a method with which the polarization converting unit 400 converts a polarization property of an entering light, and is a sectional view illustrating the polarization converting unit 400 in the direction -Z.

As shown in FIG. 3, the polarization prisms 410 extending in the direction Z are disposed in a row in the direction Y An entering light enters each polarization prism 410 in the direction X so that a polarization property thereof is converted, and then is emitted in the direction X.

Here, the light may have a polarization property of polarization P or polarization S. The polarization P refers to a polarization in which an electric field is formed horizontally to a proceeding direction of a light, and the polarization S refers to polarization that an electric field is formed vertically to a proceeding direction of a light. According to a property which each display element 20 of the display apparatus 1 demands, the polarization converting unit 400 may emit a light having one polarization property of the polarization P and the polarization S. Hereinafter, in the present exemplary embodiment, the polarization converting unit 400 will be exemplarily described to emit a light having the property of the polarization P. The case of emitting a light having the property of the polarization S may apply the present exemplary embodiment, and the description thereof is omitted.

The polarization prism 410 includes a polarization beam splitter 411 transmitting a light of the polarization S and reflecting a light of the polarization P, a phase delaying filter 413 converting a light of the polarization S transmitted by the polarization beam splitter 411 into a light of the polarization P, and a mirror 415 reflecting a light of the polarization P reflected from the polarization beam splitter 411 to emit the light.

Also, the polarization prism 410 may further include a light blocking plate 417 preventing a light from directly entering the mirror 415. The polarization beam splitter 411, the phase delaying filter 413 and the mirror 415, which are sub elements of the polarization prism 410, have extending directions in parallel with the direction Z like the extending direction of the polarization prism 410.

With this configuration, a process that the polarization property of a light entering the polarization prism 410 is converted is as follows.

In a light entering the polarization prism 410 along a path L1, a light of the polarization P and a light of the polarization S are mixed. If the entering light reaches the polarization beam splitter 411, the light of the polarization P and the light of the polarization S are divided by the polarization beam splitter 411.

In the polarization beam splitter 411, the light of the polarization S is transmitted to proceed in a path L2, and the light of the polarization P is reflected to proceed in a path L3.

The light of the polarization S proceeding in the path L2 reaches the phase delaying filter 413. The phase delaying filter 413 converts into the polarization P by delaying a wavelength of the light of the polarization S by a predetermined phase. A light converted into the polarization P through the phase delaying filter 413 is emitted in a path L4.

The light of the polarization P proceeding in the path L3 is reflected by the mirror 415 to be emitted in a path L5.

With this configuration of the polarization prism 410, the polarization converting unit 400 can adjust a polarization property of an entering light.

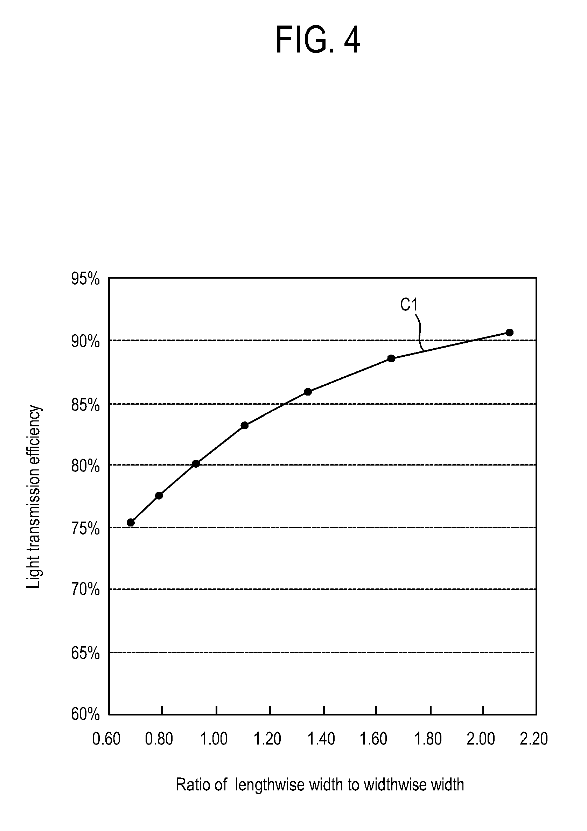

Hereinafter, a relation between the ratio of the lengthwise width DL to the widthwise width DW of the light emitting element 110 of the light source 100 according to the present exemplary embodiment, and a light transmission efficiency of the polarization converting unit 400, will be described by referring to FIGS. 2 and 4.

As shown in FIG. 2, in the present exemplary embodiment, all other configurations are the same, but a plurality of conditions which vary the ratio of the lengthwise width DL to the widthwise width DW of the light emitting element 110 are provided. Then, an experiment about a light transmission efficiency of the polarization converting unit 400 under each condition is performed. The long width of the polarization prism 410 is configured to be in parallel with direction Z.

Here, the light transmission efficiency of the polarization converting unit 400 means the ratio of the light amount emitted from the polarization converting unit 400 to the light amount entering the polarization converting unit 400.

In the present experiment, only the relation between the light source 100 and the polarization converting unit 400 is taken into consideration, and other configurations are not taken into consideration. Also, a numerical value applied to the present experiment is just experimental data, and does not define the present invention.

According to the result of the present experiment, the light transmission efficiency of the polarization converting unit 400 with respect to 7 cases varying the ratio of the lengthwise width DL and the widthwise width DW of the light emitting element 110 is represented in Table 1.

**Table 1**

| | | | | | | | |
|---|---|---|---|---|---|---|---|
| Light emitting element widthwise width (mm) | 2.80 | 2.68 | 2.40 | 2.20 | 2.00 | 1.80 | 1.60 |
| Light emitting element lengthwise width (mm) | 1.91 | 2.00 | 2.23 | 2.44 | 2.68 | 2.98 | 3.35 |
| Ratio of lengthwise width to widthwise width of light emitting element | 0.68 | 0.75 | 0.93 | 1.11 | 1.34 | 1.65 | 2.09 |
| Entering light amount of polarization converting unit | 85.0 | 85.0 | 85.0 | 85.0 | 85.0 | 84.9 | 84.9 |
| Emitted light amount of polarization converting unit | 64.0 | 65.9 | 68.1 | 70.6 | 72.9 | 75.1 | 77.0 |
| Light transmission efficiency of polarization converting unit (%) | 75 | 78 | 80 | 83 | 86 | 88 | 91 |

In the above Table 1, the ratio of the lengthwise width DL to the widthwise width DW of the light emitting element 110 is obtained by dividing the lengthwise width DL of the light emitting element 110 by the widthwise width DW, and it means that the widthwise width DW becomes relatively longer as the ratio decreases, and the lengthwise width DL becomes relatively longer as the ratio increases.

Also, the light transmission efficiency of the polarization converting unit 400 is obtained by dividing an emitted light amount of the polarization converting unit 400 by an entering light amount, and then multiplying by 100%. Since the emitted light amount and the entering light amount of the polarization converting unit 400 are relative values, the unit of the light transmission efficiency is omitted.

A curve C1 in FIG. 4 is drawn based on data of Table 1. FIG. 4 is a graph illustrating a relation between the ratio of the lengthwise width DL to the widthwise width DW of the light emitting element 110, and the light transmission efficiency.

The horizontal axis in FIG. 4 is the ratio of the lengthwise width DL to the widthwise width DW of the light emitting element 110, and as the value thereof increases, the lengthwise width DL becomes relatively longer. The vertical axis in FIG. 4 is the light transmission efficiency of the polarization converting unit 400, and as the value thereof increases, the light amount emitted from the polarization converting unit 400 becomes relatively bigger, and accordingly, it supplies more light to the display element 20.

The curve C1 in FIG. 4 shows that a vertical axis value also increases as a horizontal axis value increases. That is, as the lengthwise width DL of the light emitting element 110 becomes relatively bigger with respect to the widthwise width DW, the light transmission efficiency of the polarization converting unit 400 increases, and the light amount emitted from the polarization converting unit 400 becomes relatively bigger.

Based on this result, referring to FIG. 2 again, if the lengthwise width DL of the light emitting element 110 is relatively big with respect to the widthwise width DW, that is, if the lengthwise width DL of the light emitting element 110 is the long width thereof, the light transmission efficiency of the polarization converting unit 400 can be improved by disposing the long width of the light emitting element 110 to be in parallel with the long width of the polarization prism 410.

As described above, according to the present exemplary embodiment, although the light amount of the light emitting element 110 is the same, by disposing the long width of the light emitting element 110 to be parallel with the long width of the polarization prism 410, the light amount entering the display element 20 can be relatively increased in comparison to an otherwise case.

In the experiment of Table 1 and the graph in FIG. 4, only the relation between the light emitting element 110 and the polarization converting unit 400 is taken into consideration, and a factor of the equalizing unit 300 may be additionally taken into consideration to the above experiment condition.

If a light equalization condition by the equalizing unit 300 is additionally taken into consideration under the conditions of the light emitting element 110 and the polarization converting unit 400 like Table 1, an experimental result of the change in the light efficiency entering the display element 20 is shown in Table 2.

**Table 2**

| | | | | | | | |
|---|---|---|---|---|---|---|---|
| Ratio of lengthwise width to widthwise width of light emitting element | 0.68 | 0.75 | 0.93 | 1.11 | 1.34 | 1.65 | 2.09 |
| Light transmission efficiency of polarization converting unit (%) | 75 | 78 | 80 | 83 | 86 | 88 | 91 |
| Entering light amount of display element (F number: 1.6) | 37.9 | 39.7 | 41.7 | 43.8 | 45.2 | 44.7 | 42.0 |
| Entering light amount of display element (F number: 1.7) | 35.6 | 37.2 | 39.0 | 40.9 | 42.2 | 41.7 | 39.0 |
| Entering light amount of display element (F number: 1.8) | 32.8 | 34.3 | 36.0 | 37.8 | 38.9 | 38.4 | 35.7 |

In Table 2, the entering light amount of the display element 20 refers to a relative light amount of a light entering the display element 20 if the light amount initially generated from the light emitting element 110 is set to be 100. The F number numerically expresses the brightness of a lens, and is a value which is in proportion to a focal distance of a lens and in inverse proportion to the diameter of a lens. The present experiment varies the F number corresponding to a lens configuration of the projection optical unit 30, and makes the display element 20 have the same condition by each F number.

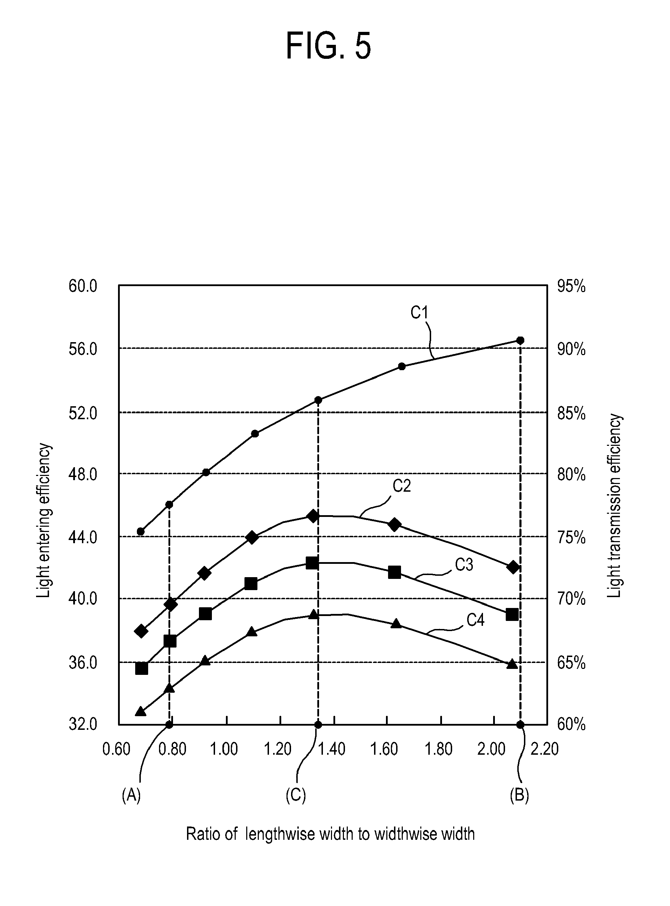

A graph in FIG. 5 is drawn based on Table 2. FIG. 5 is a graph illustrating an entering light efficiency change of the display element 20 in case of additionally considering a configuration of the equalizing unit 300 under the condition in FIG. 4.

Numerical values of the horizontal axis and the vertical axis at right in FIG. 5 are the same as FIG. 4, and respectively mean the ratio of the lengthwise width DL to widthwise width DW of the light emitting element 110 and the light transmission efficiency of the polarization converting unit 400. Numerical values of the vertical axis at left in FIG. 5 mean a light entering efficiency of the display element 20.

In FIG. 5, a curve C1 is the same as the curve C1 in FIG. 4, and means a light transmission efficiency change of the polarization converting unit 400 if the equalizing unit 300 is not taken into consideration. The curve C1 shows that the light transmission efficiency of the polarization converting unit 400 increases as the ratio of the lengthwise width DL to the widthwise width DW of the polarization converting unit 400 increases.

Curves C2 to C4 respectively represent light entering efficiencies of the display element 20 corresponding to different F numbers. Since the curves C2 to C4 show the substantially same patterns irrespective of the F number, the difference of the F number has no substantial effect on the present invention.

In case of the curve C2, the vertical axis value initially increases as the horizontal axis value increases, and the vertical axis value then gradually decreases after the peak at which the horizontal axis value is 1.34. The curves C3 and C4 also show the same change patterns as the curve C1 despite different relative values of the vertical axis.

That is, with a consideration of the case that the illumination optical unit 10 is actually embodied, it can be known that the light efficiency does not continuously increase as shown in the curve C1 as the ratio of the lengthwise width DL to the widthwise width DW of the light emitting element 110 increases, and there is an appropriate ratio representing the peak of the light efficiency as shown in the curves C2 to C4.

This phenomenon will be described more in detail by referring to FIGS. 2, 4 and 6A-6C.

As shown in FIG. 2, the equalizing unit 300 includes the first equalizing lens 310 and the second equalizing lens 320, and the first equalizing lens 310 and the second equalizing lens 320 are arrayed two-dimensionally so that the cell lenses 311, 313, 321 and 323 having the same standards can correspond to each other.

First cell lenses 311 and 313 of the first equalizing lens 310 respectively and optically correspond to second cell lenses 321 and 323 of the second equalizing lens 320. For example, when an entering light is equalized to be emitted by the first cell lens 311, this emitted light forms one light image corresponding to the first cell lens 311. This light image enters the second cell lens 321 provided to optically correspond to the first cell lens 311, and then the second cell lens 321 forms a light image equalized again to emit to the polarization converting unit 400.

These light images are formed in plural within the plane Y-Z by each cell lenses 311, 313, 321 and 323 which the equalizing unit 300 includes. If light images respectively formed by vicinal cell lenses 321 and 323 are overlapped with each other, the light efficiency may be deteriorated.

That is, it is preferable but not necessary that a light transmitting the first cell lens 311 enters the second cell lens 321 optically corresponding to the first cell lens 311. If a light transmitting the first cell lens 311 enters another vicinal cell lens 323 instead of the second cell lens 321, an overlapping between light images entering the polarization converting unit 400 happens.

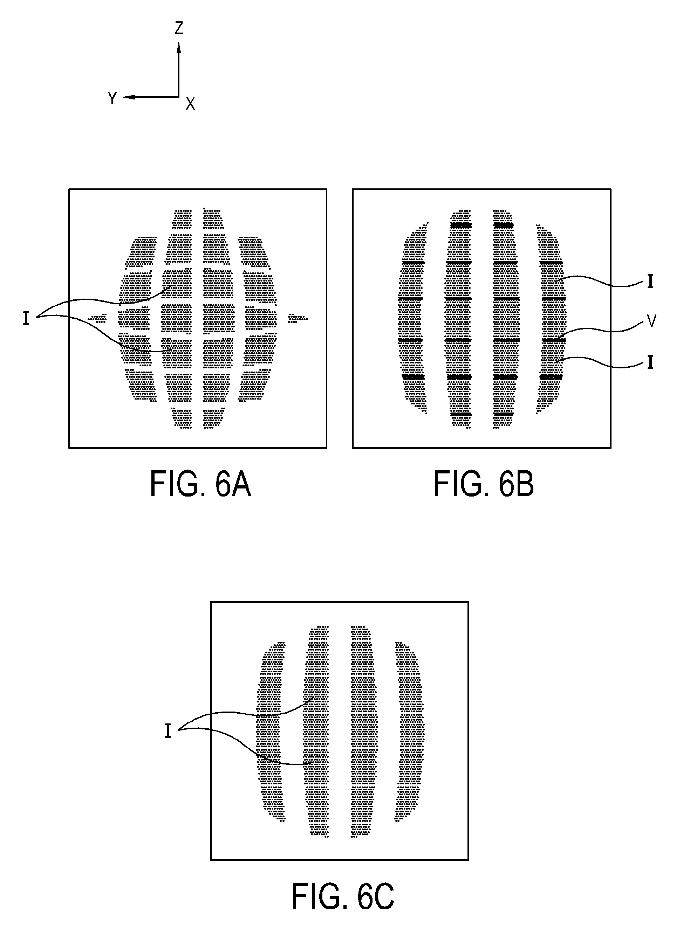

FIGS. 6A-6C illustrate a type of a light image I entering the polarization converting unit 400 in the case that the ratio of the lengthwise width DL to the widthwise width DW of the light emitting element 110 is 0.75, 1.34 and 2.09 in the graph of FIG. 5.

Three types of the light images I of FIGS. 6A-6C respectively correspond to the case that the ratio of the lengthwise width DL to the widthwise width DW of the light emitting element 110 is 0.75, 2.09 and 1.34.

FIG. 6A illustrates the case that the widthwise width DW of the light emitting element 110 is bigger than the lengthwise width DL. In this case, in the light image I corresponding to each cell lens 311 and 321, it can be known that the width in the direction X is relatively big and the width in the direction Y is relatively small, and an interval between vicinal light images I is also relatively wide.

If this light image I enters the polarization converting unit 400 in which the long width of the polarization prism 410 is in parallel with the direction Z, the efficiency of a light entering the polarization converting unit 400 is deteriorated due to the big width in the direction X and the small width in the direction Y of the light image P, the wide interval between the vicinal light images P, etc.

FIG. 6B illustrates the case that the lengthwise width DL of the light emitting element 110 is bigger than the widthwise width DW, and the ratio thereof is 2.09. In comparison to the case (A), it can be known that the width in the direction X is small but the width in the direction Y is big. However, an overlapping area V is formed between vicinal light images I along the direction Z, and the light efficiency is deteriorated due to the overlapping area V.

Also, FIG. 6C illustrates the case that the lengthwise width DL of the light emitting element 110 is bigger than the widthwise width DW, and the ratio thereof is 1.34. In comparison to FIG. 6B, it can be known that no overlapping area V appears between vicinal light images I along the direction Z. Also, in FIG. 6C, since the width in the direction X is small, and the width in the direction Y is big in comparison to the FIG. 6A, the amount of a light entering the polarization prism 410 relatively increases in comparison to FIG. 6A. Accordingly, the light efficiency can be improved.

That is, to improve the efficiency of a light finally entering the display element 20, it is preferable but not necessary to dispose the long width of the light emitting element 110 to be in parallel with the long width of the polarization prism 410, and determine the ratio of the long width and the short width of the light emitting element 110 so that the light image I by each cell lens 311, 313, 321 and 323 of the equalizing unit 300 can be prevented from being overlapped with each other.

Here, the numerical values shown in Tables 1 and 2, and FIGS. 4 and 5 are just experimental data, and each value may be determined variously depending on an environment of the display apparatus 1.

Also, in embodying the present invention, the ratio of the long width and the short width of the light emitting element 110 may be determined so that the overlapping ratio of the light image I by each cell lens 311 and 321 is less than or equal to a predetermined setting value. The predetermined setting value may be variously changed, and is not defined by a specific value.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an illumination optical unit which generates and illuminates light;
a display element which forms an image by the light illuminated from the illumination optical unit; and
a projection optical unit which projects the image formed in the display element on a screen,
wherein the illumination optical unit comprises:
a light source which comprises a light emitting area, and
a polarization converting unit which comprises a plurality of polarization prisms which polarize and convert an entering light from the light source, and
wherein the light source is disposed so that a long width of the light emitting area corresponds to a long width of the polarization prisms.

2. The display apparatus according to claim 1, wherein a direction of the long width of the polarization prisms crosses at right angles with an entering direction of the entering light, and
a direction of the long width of the light emitting area is parallel with the direction of the long width of the polarization prisms.

3. The display apparatus according to claim 1 or claim 2, wherein:
the illumination optical unit further comprises an equalizing unit which is disposed on a light path between the light source and the polarization converting unit,
the equalizing unit comprises a plurality of cell lenses which uniformly adjust a light amount distribution of a light emitted from the light source, and
a ratio of the long width and the short width of the light emitting area is designated so that a ratio by which light images respectively formed by the plurality of cell lenses are overlapped can be less than or equal to a predetermined value.

4. The display apparatus according to claim 3, wherein a ratio of a long width and a short width of one of the cell lenses is substantially the same as a ratio of a long width and a short width of the display element.

5. The display apparatus according to any preceding claim, wherein the plurality of polarization prisms are arrayed to correspond to a display area of the display element.

6. The display apparatus according to any preceding claim, wherein the polarization prisms comprise:
a polarization beam splitter which transmits light of a first polarization of the entering light and reflects light of a second polarization of the entering light,
a phase delaying filter which converts the light of the first polarization transmitted by the polarization beam splitter into a light of the second polarization and emits the light of the second polarization in a predetermined direction, and
a mirror which reflects the light of the second polarization reflected by the polarization beam splitter and emits the light of the second polarization in the predetermined direction.

7. The display apparatus according to claim 6, wherein the polarization beam splitter extends to cross at right angles with the predetermined direction, and
the long width of the light emitting area is parallel with a long width of the polarization beam splitter.

8. The display apparatus according to any preceding claim, wherein the light source comprises a light emitting diode element.

9. The display apparatus according to any preceding claim, wherein the display element comprises a liquid crystal display panel.

10. An illumination optical unit of a display apparatus, the illumination optical unit comprising:
a light source which comprises a light emitting area; and
a polarization converting unit which comprises a plurality of polarization prisms which polarize and convert an entering light from the light source, and emits the polarized and converted light to a display element forming an image,
wherein the light source is disposed so that a long width of the light emitting area corresponds to a long width of the polarization prisms.

11. The illumination optical unit of the display apparatus according to claim 10, wherein a direction of the long width of the polarization prisms crosses at right angles with an entering direction of the entering light, and
a direction of the long width of the light emitting area is parallel with a direction of the long width of the polarization prisms.

12. The illumination optical unit of the display apparatus according to claim 10 or claim 11, further comprising an equalizing unit which is disposed on a light path between the light source and the polarization converting unit, wherein:
the equalizing unit comprises a plurality of cell lenses which uniformly adjust a light amount distribution of light emitted from the light source, and
a ratio of the long width and the short width of the light emitting area is designated so that a ratio by which light images respectively formed by the plurality of cell lenses are overlapped can be less than or equal to a predetermined value.

13. The illumination optical unit of the display apparatus according to any one of claims 10 to 12, wherein the plurality of polarization prisms are arrayed to correspond to a display area of the display element.

14. The illumination optical unit of the display apparatus according to any one of claims 10 to 12, wherein the polarization prisms comprise:
a polarization beam splitter which transmits light of a first polarization of the entering light and reflects light of a second polarization of the entering light,
a phase delaying filter which converts the light of the first polarization transmitted by the polarization beam splitter into a light of the second polarization and emits the light of the second polarization in a predetermined direction, and
a mirror which reflects the light of the second polarization reflected by the polarization beam splitter and emits the light of the second polarization in the predetermined direction.

15. The illumination optical unit of the display apparatus according to claim 14, wherein the polarization beam splitter extends to cross at right angles with the predetermined direction, and
the long width of the light emitting area is in parallel with a long width of the polarization beam splitter.
